# EUROPEAN PATENT APPLICATION

(11) **EP 4 529 195 A1**
(43) Date of publication of application: **26.03.2025**
(21) Application number: 23888034.8
(22) Date of filing: 08.11.2023
(51) Int. Cl.: H04N 21/472, H04N 21/482

(54) **LIVESTREAMING CONTENT PLAYBACK METHOD AND APPARATUS, DEVICE, STORAGE MEDIUM, AND PROGRAM PRODUCT**

(30) Priority: 08.11.2022 CN 202211394097
(71) Applicant: Beijing Zitiao Network Technology Co., Ltd., Beijing 100190 (CN)
(72) Inventor: LI, Yijie, Beijing 100028 (CN)
(74) Representative: Williams, Michael David
(86) International application number: PCT/CN2023/130394
(87) International publication number: WO 2024/099345

(57) **Abstract**

Embodiments of the present disclosure provide a livestreaming content playback method and apparatus, a device, a storage medium, and a program product. The method comprises: displaying target media content in a media content display page; in response to a first interaction operation acting in the media content display page, displaying a target panel, wherein a preset association area of the target panel is used for displaying a standby livestreaming list of a user; and in response to a playback operation acting in the standby livestreaming list, playing target livestreaming content in a livestreaming page, wherein the playback operation acts on a first livestreaming content identifier in the standby livestreaming list, and the target livestreaming content corresponds to the first livestreaming content identifier. According to the embodiments of the present disclosure, by using the described technical solution, a user can quickly return to playback of a corresponding livestreaming watched by the user, thereby enriching the interaction mode for livestreaming watching.

## Description

This application claims the priority to and benefits of the Chinese Patent Application, No. 202211394097.X, filed on November 8, 2022, the disclosure of which are hereby incorporated by reference in its entirety.

### TECHNICAL FIELD

Embodiments of the present disclosure relate to a method, an apparatus and a device for playing live stream content, and a storage medium and a program product.

### BACKGROUND

Currently, in some applications, the user is able to continue to view or return to the live stream image of the live stream room that he lastly exits after exiting the live stream room only by means of a small window, so the interaction way is relatively simple.

### SUMMARY

Embodiments of the present disclosure provides a method, an apparatus and a device for playing live stream content, and a storage medium and a program product to enrich the interactive way of watching live stream.

In first aspect, the embodiments of the present disclosure provide a method for playing live stream content, comprising:
presenting target media content in a media content presentation page;
displaying a target panel, in response to a first interactive operation acting in the media content presentation page, wherein a preset associated region of the target panel is configured for displaying a ready-to-view live stream list of a user; and
playing a target live stream content in a live stream page, in response to a playback operation acting on a first live stream content identification in the ready-to-view live stream list, wherein the playback operation acts on a first live stream content identification in the ready-to-view live stream list, and the target live stream content corresponds to the first live stream content identification.

In second aspect, the embodiments of the present disclosure provide an apparatus for playing live stream content, comprising:
a presentation module, configured for presenting target media content in a media content presentation page;
a first displaying module, configured for displaying a target panel in response to a first interactive operation acting in the media content presentation page, wherein a preset associated region of the target panel is configured for displaying a ready-to-view live stream list of a user; and
a playing module, configured for playing a target live stream content in a live stream page in response to a playback operation acting on a first live stream content identification in the ready-to-view live stream list, wherein the playback operation acts on a first live stream content identification in the ready-to-view live stream list, and the target live stream content corresponds to the first live stream content identification.

In third aspect, the embodiments of the present disclosure provide an electronic device, comprising:
at least one processor; and
a memory, communicatively connected with the at least one processor;
wherein the memory stores a computer program executable by the at least one processor; and the computer program is executed by the at least one processor to enable the at least one processor to perform the method for playing the live stream content according to the embodiments of the present disclosure.

In fourth aspect, the embodiments of the present disclosure provide a computer-readable storage medium, wherein the computer-readable storage medium stores computer instructions for causing a processor, when executed, to perform the method for playing the live stream content according to the embodiments of the present disclosure.

In fifth aspect, the embodiments of the present disclosure provide a computer program product, wherein the computer program product comprises a computer program which, when executed by a processor, performs the method for playing the live stream content according to the embodiments of the present disclosure.

### BRIEF DESCRIPTION OF DRAWINGS

The above and other features, advantages, and aspects of embodiments of the present disclosure will become more apparent with reference to the following detailed description when taken in conjunction with the accompanying drawings. Throughout the drawings, the same or similar reference numerals indicate the same or similar elements. It should be understood that the drawings are illustrative and that the origins and elements are not necessarily drawn to scale.
Fig. 1 is a schematic flow chart of a method for playing live stream content provided by an embodiment of the present disclosure;
Fig. 2 is a display schematic diagram of a ready-to-view live stream list according to an embodiment of the present disclosure;
Fig. 3 is a display schematic diagram of another ready-to-view live stream list according to an embodiment of the present disclosure;
Fig. 4 is a flow chart showing another method for playing live stream content according to an embodiment of the present disclosure;
Fig. 5 is a display schematic diagram of a first panel according to an embodiment of the present disclosure;
Fig. 6 is a display schematic diagram of another first panel according to an embodiment of the present disclosure;
Fig. 7 is a display schematic diagram of yet another first panel according to an embodiment of the present disclosure;
Fig. 8 is a display schematic diagram of a third panel according to an embodiment of the present disclosure;
Fig. 9 is a structure block diagram of an apparatus for playing live stream content according to an embodiment of the present disclosure; and
Fig. 10 is a structurally schematic diagram of an electronic device according to an embodiment of the present disclosure.

### DETAILED DESCRIPTION

Embodiments of the present invention are described in more detail below with reference to the accompanying drawings. While some embodiments of the disclosure have been illustrated in the accompanying drawings, it should be understood that the disclosure may be embodied in various forms and should not be construed as limited to the embodiments set forth herein. Rather, these embodiments are provided for a more thorough and complete understanding of the disclosure. It should be understood that the drawings and embodiments of the present disclosure are for illustrative purposes only and are not intended to limit the scope of the present disclosure.

It should be understood that the various steps recited in the method embodiments of the present disclosure may be performed in a different order and/or in parallel. Moreover, the method embodiments may include additional steps and/or omit performing the steps shown. The scope of the present disclosure is not limited in this respect.

As used herein, the term "including" as used herein and its variations are open-ended including, i.e., "including but not limited to". The term "based on" is "based, at least in part, on". The term "one embodiment" means "at least one embodiment". The term "another embodiment" means "at least one further embodiment". The term "some embodiments" means "at least some embodiments". Relevant definitions of other terms will be given in the following description.

It should be noted that references to "first", "second", and the like in this disclosure are merely used to distinguish between different apparatuses, modules, or units and are not intended to limit the order or interdependence of the functions performed by the apparatuses, modules, or units.

It is noted that the references to "a", "an", and "a plurality" in this disclosure are intended to be illustrative and not limiting, and those skilled in the art will understand that "one or more" is to be interpreted unless the context clearly dictates otherwise.

The names of messages or information that interact between devices in embodiments of the present disclosure are for illustrative purposes only and are not intended to limit the scope of such messages or information.

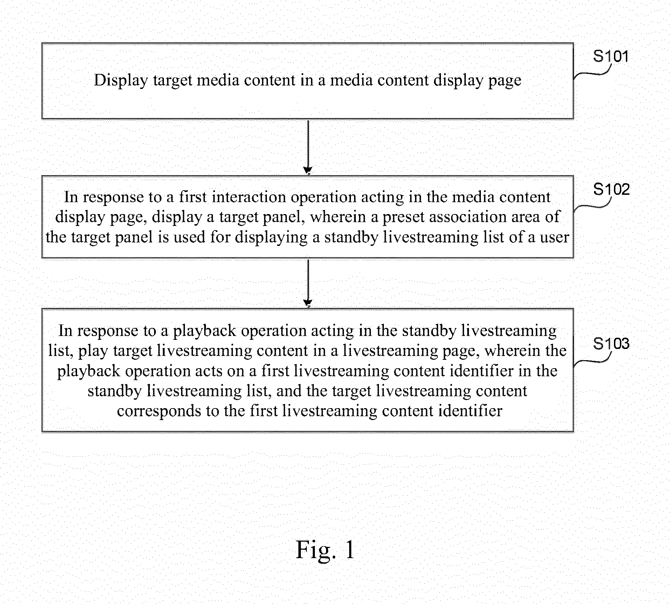

Fig. 1 is a schematic flow chart of a method for playing live stream content provided by an embodiment of the present disclosure. The method may be performed by an apparatus for playing live stream content, wherein the apparatus may be implemented in software and/or hardware and may be configured in an electronic device, for example in a mobile phone or a tablet computer. The method for playing live stream content provided by the embodiments of the present disclosure is suitable for quickly returning a scene in the live stream room viewed by a user. As shown in Fig.1, the method for playing live stream content provided by the present embodiment may include the following steps.

S101, target media content is presented in a media content presentation page.

In this embodiment, the target media content may be presented in the media content presentation page, such as live stream content and/or non-live stream content is presented in the media content presentation page.

The media content presentation page may be a page for presenting the media content, such as a live stream page or a video playback page. The target media content may be media content currently displayed in the media content presentation page, which may include live stream content and/or non-live stream content. Namely, the media content presentation page may be used for displaying the live stream content and/or non-live stream content. Accordingly, the media content presentation page may be a presentation page of the live stream content and/or non-live stream content. The non-live stream content may be media content other than live stream content, such as media content published by a publisher. Exemplarily, the non-live stream content may include video content and/or graphical text content, etc.

S102, a target panel is displayed in response to a first interactive operation acting in the media content presentation page, wherein a preset associated region of the target panel is configured for displaying a ready-to-view live stream list of a user.

The first interactive operation may be a trigger operation for instructing to display a target panel of a user so as to display a ready-to-view live stream list of the user in a preset associated region of the target panel, such as an operation acting on a corresponding control displayed in a media content presentation page, or a corresponding gesture operation acting in the media content presentation page, etc. The target panel may be a panel for displaying the ready-to-view live stream list of the user. The preset associated region may be an association region of the target panel, which may be located inside the target panel and/or outside the target panel.

The ready-to-view live stream list may be a list of the ready-to-view live stream of the user, such as a live stream list that the user hangs up for the user's reviewing, which may be set by the user. The ready-to-view live stream may be considered a live stream for the user's quick reviewing. In other words, the ready-to-view live stream may be considered a live stream waiting for the user's reviewing. A preview image of a live stream which the user has just exited is generally displayed in the form of a small window in the associated page when the user exits the live stream page to display the associated page of the live stream based on the settings of the user, so that the user can quickly return to the live stream page of the live stream by clicking the small window to continue viewing the live stream. This embodiment provides a way to quickly return to viewing a live stream, so that the user can quickly return to viewing a ready-to-view live stream added to the ready-to-view live stream list when viewing non-live stream content or other live stream content. It should be noted that the ready-to-view live stream list is a live stream list different from the user's attention live stream list or collection live stream list, and the user's adding or removing a certain live stream to or from the ready-to-view live stream list does not affect the host of which the user follows in the live stream or the live stream room for which the live stream is collected. For example, a certain live stream is located in the user's ready-to-view live stream list, but the user may neither follow the host of the live stream nor collect the live stream room corresponding to the live stream.

In this embodiment, regardless of whether the user is watching live stream content or non-live stream content, the user can view his or her ready-to-view live stream list by performing a first interactive operation. Accordingly, the current application program, upon receiving the first interactive operation acting in the media content presentation page, displays a target panel, and can display the ready-to-view live stream list of the user in the preset associated region of the target panel.

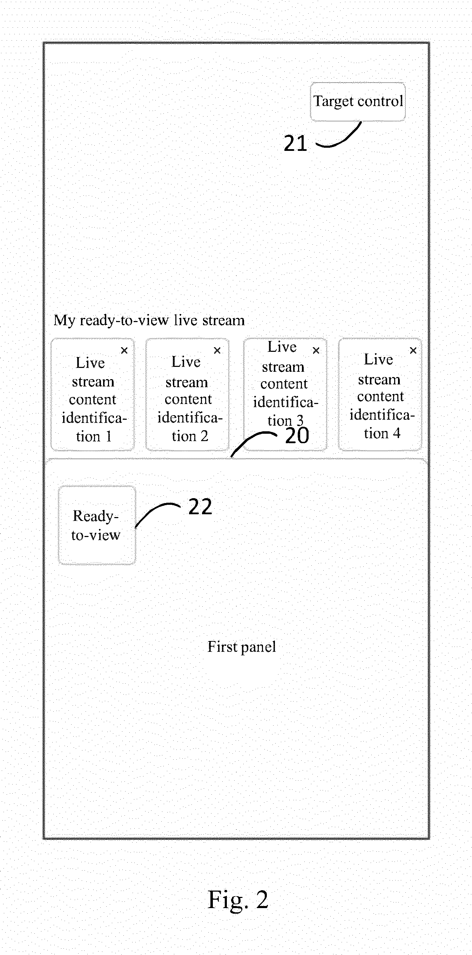

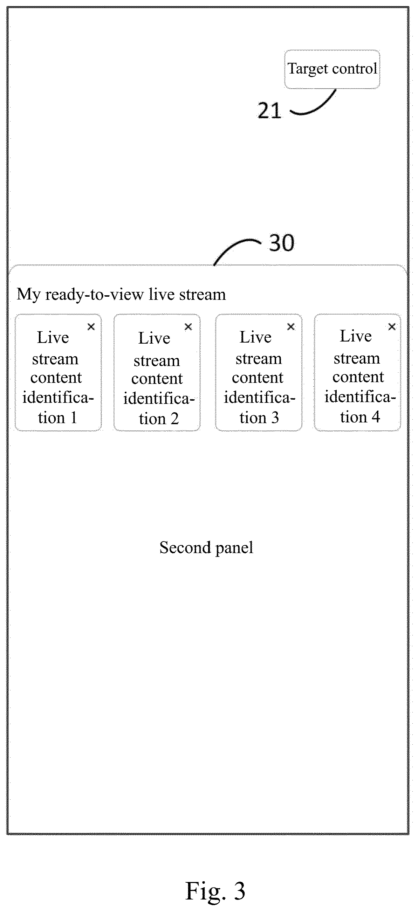

Exemplarily, upon receiving a first interactive operation for instructing to display the first panel 20, such as receiving a long press operation acting in the media content presentation page, the first panel 20 may be displayed and the ready-to-view live stream list of the user may be displayed in the preset associated region located outside the first panel 20, as shown in Fig. 2. Upon receiving the first interactive operation for instructing to display the second panel 30, such as detecting that the user triggers the target control 21 displayed in the media content presentation page, the second panel 30 may be displayed and the ready-to-view live stream list of the user may be displayed in the preset associated region located inside the second panel 30, as shown in Fig. 3.

In the present embodiment, the live stream content identification added by the user in the ready-to-view live stream can be displayed in the ready-to-view live stream list, live stream of different sessions of the same host may correspond to the same or different live stream content identifications. The live stream content identification can be used for uniquely identifying a live stream of a certain session, alternatively, it can be used for uniquely identifying a live stream of a certain live stream room or a certain host. The present embodiment does not limit the display mode of the live stream content identification. Optionally, as shown in Figs. 2 and 3, the live stream content identification includes a live stream card, which is used for displaying at least one of a second image corresponding to the respective live stream content and interaction status information in the corresponding live stream room, the second image including a live stream cover or a preview image.

Herein, the second image can include a live stream cover or a preset image. In other words, the second image can be an image of a live stream cover or a real-time live stream image of the corresponding live stream. Exemplarily, the live stream card corresponding to the ready-to-view live stream added by the user may be displayed in the ready-to-view live stream list, and the live stream cover and/or the preview image of the ready-to-view live stream may be displayed on the live stream card. For example, each of live stream cards in the ready-to-view live stream list may display the live stream cover/the preview image of the corresponding ready-to-view live stream; alternatively, part of the live stream cards in the ready-to-view live stream list may display the preview image of the corresponding ready-to-view live stream, and the other live stream cards except the part of the live stream cards may display the live stream cover of the corresponding ready-to-view live stream. The part of live stream cards may be, for example, a first live stream card in the ready-to-view live stream list. The order of arranging the live stream cards of the ready-to-view live stream in the ready-to-view live stream list can be set flexibly, for example, the live stream cards of the ready-to-view live stream can be ordered according to the adding order of the user or the reverse order of the adding order, etc.

The live stream card of the ready-to-view live stream can also display interactive status information in the live stream room of the ready-to-view live stream. The interaction status information can be considered to be state information for indicating whether a preset interaction event is being performed and/or what preset interaction event is being performed in the live stream room of the corresponding ready-to-view live stream. For example, when a preset interaction event is not currently performed in the live stream room of a ready-to-view live stream, the interaction status information is not displayed on the live stream card of the ready-to-view live stream, so as to indicate that the preset interaction event is not currently performed in the live stream room of the ready-to-view live stream. When a preset interaction event is currently performed in the live stream room of the ready-to-view live stream, the interaction status information corresponding to the preset interaction event currently performed in the live stream room of the ready-to-view live stream is displayed on the live stream card of the ready-to-view live stream, so as to indicate that the preset interaction event is being currently performed in the live stream room of the ready-to-view live stream and the event type of the preset interaction event currently being performed. The preset interaction event may include a Hong Bao type interaction event (e.g. receiving or sending red envelopes with money, etc.), a competitive type interaction event (e.g. a PK event or a voting event, etc.), a recommending type interaction event for recommending a user to purchase one or more items, a guessing type interaction event (e.g. you draw and I guess or guess a puzzle, etc.), a singing type interaction event (e.g. a KTV singing event or a juke event, etc.), and/or a chat type interaction event for the host to conduct voice chat/video chat with the viewer, etc. The interaction status information of different preset interaction events are different.

In the present embodiment, when watching a certain live stream content, for example, the live stream has not ended, the user can add the content as a ready-to-view live stream to the ready-to-view live stream list, for example, can add a live stream content identification thereof to the ready-to-view live stream list. When the live stream has ended, it may or may not remove the live stream content identification from the ready-to-view live stream list. For example, the live stream content identification can be removed from the ready-to-view live stream list, that is, the ready-to-view live stream list may only be used for displaying the live stream content identification of live stream content in the living stream which has not ended yet. Accordingly, when the host of the live stream restarts the live stream subsequently, the live stream content identification thereof may also be re-added to the ready-to-view live stream list. It is also possible not to re-add the live stream content identification to the ready-to-view live stream list, until receiving an adding operation for adding a ready-to-view live stream content. At this time, optionally, the ready-to-view live stream list is configured for displaying the live stream content identification of the live stream content in the live stream that has not been ended, and the method further includes: for each live stream content identification in the ready-to-view live stream list, when the live stream of current live stream content corresponding to the current live stream content identification has ended, removing the current live stream content identification from the ready-to-view live stream list; and when a host of the current live stream content restarts a live stream, re-adding a current live stream content identification to the ready-to-view live stream list, or not re-adding the current live stream content identification to the ready-to-view live stream list.

S103, a target live stream content is played in a live stream page in response to a playback operation acting on a first live stream content identification in the ready-to-view live stream list, wherein the playback operation acts on the first live stream content identification in the ready-to-view live stream list, and the target live stream content corresponds to the first live stream content identification.

The playback operation may be a trigger operation for instructing to play a live stream content corresponding to a certain live stream content identification in the ready-to-view live stream list, such as an operation for triggering a certain live stream content identification displayed in the ready-to-view live stream list. The first live stream content identification may be considered to be the live stream content identification for which the trigger operation is directed, namely, the live stream content identification triggered by the user in the ready-to-view live stream list. The target live stream content may be considered to be live stream content corresponding to the first live stream content identification.

Specifically, when receiving the playback operation of the user in the ready-to-view live stream list, such as detecting that a current user triggers a certain live stream content identification displayed in the ready-to-view live stream list, the live stream content corresponding to the playback operation can be played in a live stream page.

When the live stream content corresponding to the playback operation is played in the live stream page, for example, if the currently displayed media content presentation page is the live stream page, the live stream content corresponding to the playback operation can be played in the media content presentation page; alternatively, the current page is switched from the media content presentation page to a preset live stream page, and the live stream content corresponding to the playback operation is played in the preset live stream page. If the currently displayed media content presentation page is not the live stream page, the current page can be switched from the media content presentation page to a preset live stream page, and live stream content corresponding to the playback operation is played in the preset live stream page.

In the method for playing live stream content provided in the present embodiment, the target media content is presented in the media content presentation page; in response to a first interactive operation acting in the media content presentation page, a target panel is displayed, wherein a preset associated region of the target panel is configured for displaying a ready-to-view live stream list of a user; and in response to a playback operation acting in the ready-to-view live stream list, a target live stream content is played in a live stream page, wherein the playback operation acts on a first live stream content identification in the ready-to-view live stream list, and the target live stream content corresponds to the first live stream content identification. By using the above-mentioned technical solution, the present embodiment displays a ready-to-view live stream list based on a first interactive operation of the user, and plays corresponding live stream content based on the playback operation of the user in the ready-to-view live stream list, which can quickly return to play the corresponding live stream viewed by the user, enrich the interactive mode for viewing the live stream, provide convenience for the user to view the ready-to-view live stream, and improve the live stream viewing experience of the user.

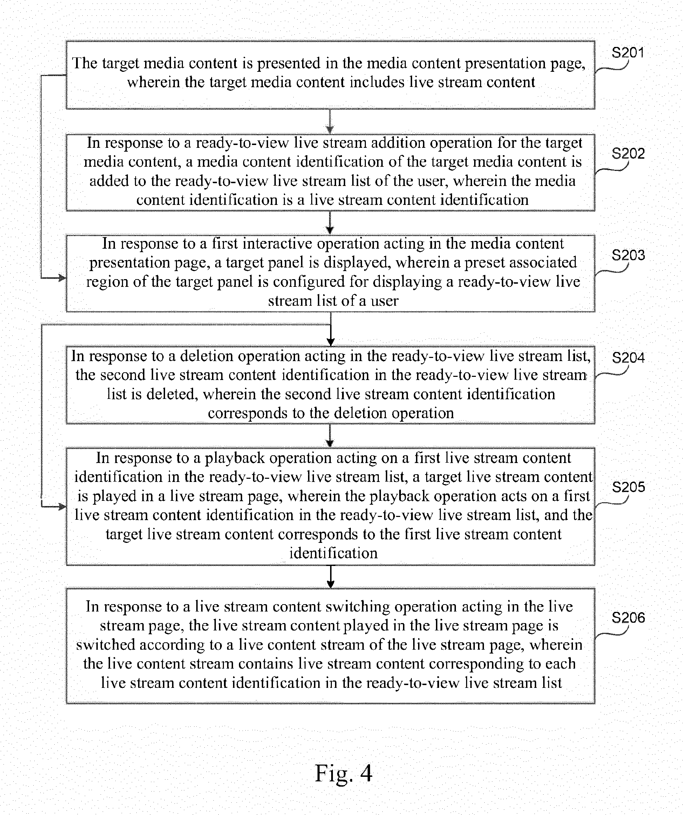

Fig. 4 is a flow chart showing another method for playing live stream content according to an embodiment of the present disclosure. The solution of this embodiment can be combined with one or more solutions of the embodiments described above. Optionally, the target media content includes live stream content, the method further includes: in response to a ready-to-view live stream addition operation for the target media content, adding a media content identification of the target media content to the ready-to-view live stream list of the user, wherein the media content identification is a live stream content identification.

Optionally, after the displaying the target panel, the method further includes: in response to a deletion operation acting in the ready-to-view live stream list, deleting a second live stream content identification in the ready-to-view live stream list, wherein the second live stream content identification corresponds to the deletion operation.

Optionally, after the playing the target live stream content in the live stream page, the method further includes: in response to a live stream content switching operation acting in the live stream page, switching the live stream content played in the live stream page according to a live content stream of the live stream page, wherein the live content stream contains live stream content corresponding to each live stream content identification in the ready-to-view live stream list.

Accordingly, the method for playing live stream content provided by the present embodiment may include the following steps.

S201, the target media content is presented in the media content presentation page to perform S202 or S203, wherein the target media content includes live stream content.

S202, in response to a ready-to-view live stream addition operation for the target media content, a media content identification of the target media content is added to the ready-to-view live stream list of the user, wherein the media content identification is a live stream content identification.

Herein, the ready-to-view live stream addition operation may be considered to be a trigger operation for adding the currently viewed media content to the ready-to-view live stream list, such as an operation of triggering an addition control displayed in the first panel or the third panel. The media content identification of the target media content may be an identification of the target media content, which may be used to uniquely identify the target media content. The media content identification of the target media content is a live stream content identification (which can be specifically the same as the first live stream content identification). In other words, the target media content is the live stream content.

In the present embodiment, the user may add the live stream content, which he or she views, to the ready-to-view live stream list by performing a ready-to-view live stream addition operation while viewing the live stream content, so that the user can quickly return and continue viewing the live stream content based on the ready-to-view live stream list after exiting the live stream room.

Specifically, in the case where the target media content is the live stream content, when it is detected that the user performs the ready-to-view live stream addition operation, such as when it is detected that the user triggers an addition control displayed in the first panel or the third panel, the media content identification of the currently played target media content can be added to the ready-to-view live stream list, that is, the live stream content identification of the currently played live stream content is added to the ready-to-view live stream list. When the live stream content identification of the currently played live stream content is added to the ready-to-view live stream list, the live stream content identification may be for example added to the first or last place of the ready-to-view live stream list, etc., and the present embodiment is not limited thereto. Optionally, the media content identification of the target media content may be added to the first place in the ready-to-view live stream list, that is, the media content identification of the target media content is presented to be the first live stream content identification in the ready-to-view live stream list, so as to facilitate the user viewing the media content identification of the target media content which the user adds.

It can be understood that if the media content identification of the target media content is already in the ready-to-view live stream list before the ready-to-view live stream addition operation is received at this time, the addition control may not be displayed in the first panel or the third panel of the target media content, alternatively, the user may be prompted that the target media content is already in the ready-to-view live stream list when the user's ready-to-view live stream addition operation is received.

In the present embodiment, the target panel of the preset associated region for displaying the ready-to-view live stream list of the user may include a first panel and/or a second panel. Accordingly, when the first interactive operation is received, the user's ready-to-view live stream list may be displayed in the preset associated region of the first panel or the second panel based on the first interactive operation of the user. Herein, the first panel may be a target panel for displaying the addition control, and the second panel may be a target panel not for displaying the addition control. For example, the first panel may be a long press panel that is displayed in response to a user's long press operation, and the second panel may be a more live stream panel that is displayed in response to user's more live stream operations. The first interactive operation may include a long press operation and/or a more live stream operations.

At this time, optionally, the target panel includes at least one of a first panel in which an addition control for the target media content is displayed and a second panel in which an addition control for the target media content is not displayed; and the addition control is configured for triggering the execution of the ready-to-view live stream addition operation.

Herein, the first panel can be an interaction panel corresponding to the target media content. A plurality of interaction controls including an addition control can be displayed in the first panel, and each interaction control can be used for a user to interact with the target media content. The second panel may be a live stream aggregation panel in which a plurality of live stream lists including a ready-to-view live stream list may be displayed for a user to view the live stream in the corresponding live stream list. The plurality of interaction controls may include, for example, an addition control and a share control, etc. The plurality of live stream lists may include, for example, a ready-to-view live stream list and at least one recommending live stream list, etc., and the present embodiment are not limited thereto. The recommending live stream list may be considered to be a list of live streams recommended to a user, and the recommendation rules corresponding to different recommending live stream lists may be different.

In some embodiments, the ready-to-view live stream addition operation acts on the addition control displayed in the first panel, and the displaying the target panel includes: if the ready-to-view live stream list of the user is empty, displaying the target panel, wherein the ready-to-view live stream list of the user is not displayed. The adding a media content identification of the target media content to the ready-to-view live stream list of the user, includes: displaying the ready-to-view live stream list in the preset associated region of the target panel, and displaying the media content identification of the target media content in the ready-to-view live stream list.

In the above-mentioned embodiments, the preset associated region of the first panel may be located inside the first panel or outside the first panel. When the ready-to-view live stream list is empty, the ready-to-view live stream list of the user may not be displayed in the preset associated region of the first panel, for example, the preset associated region is not displayed.

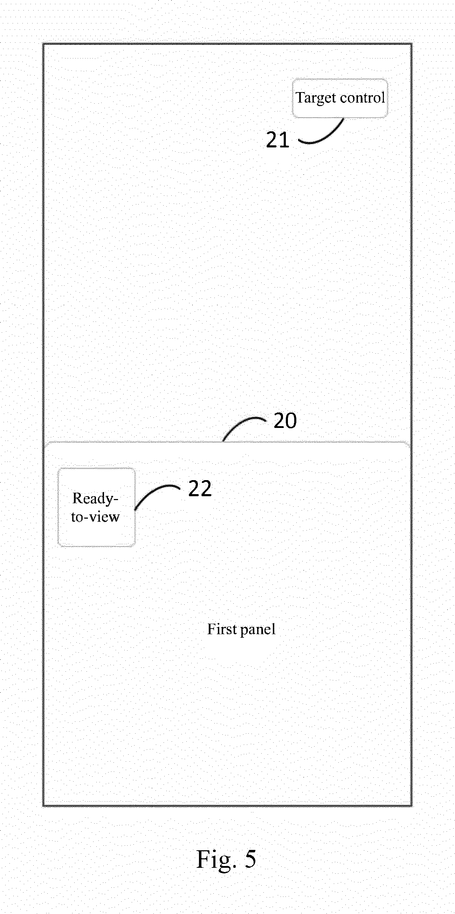

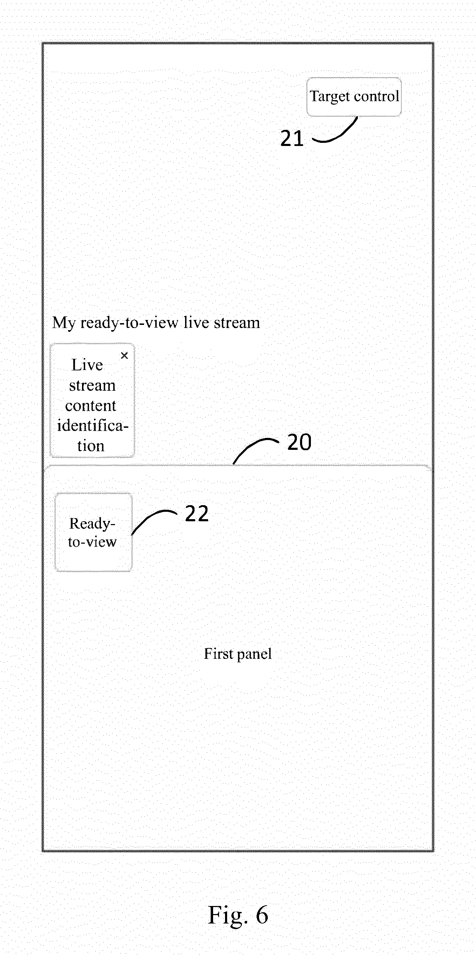

Specifically, when it is detected that the user acts on the first interactive operation in the media content presentation page for instructing the display of the first panel 20, the first panel 20 can be presented in the media content presentation page, and the addition control 22 of the target media content is displayed in the first panel 20 for the case where the target media content is the live stream content. For the case where the ready-to-view live stream list is empty, the ready-to-view live stream list of the user is not displayed in the preset associated region of the first panel 20, as shown in Fig. 5. Accordingly, when it is detected that the user acts on the ready-to-view live stream addition operation in the first panel 20, such as when it is detected that the user triggers the addition control 22 displayed in the first panel 20, the media content identification of the target media content may be added to the ready-to-view live stream list of the user, the preset associated region for displaying the first panel 20 is added, and the ready-to-view live stream list is added and displayed in the preset associated region, as shown in Fig.6.

In some embodiments, the ready-to-view live stream addition operation acts on an addition control displayed in the first panel, and the displaying the target panel includes: if the ready-to-view live stream list of the user is not empty, displaying the target panel and displaying the ready-to-view live stream list in the preset associated region of the target panel. The adding a media content identification of the target media content to the ready-to-view live stream list of the user, includes: adding a media content identification for displaying the target media content to the ready-to-view live stream list.

In the above-mentioned embodiment, when the ready-to-view live stream list is not empty, the ready-to-view live stream list of the user may be displayed in the preset associated region of the first panel.

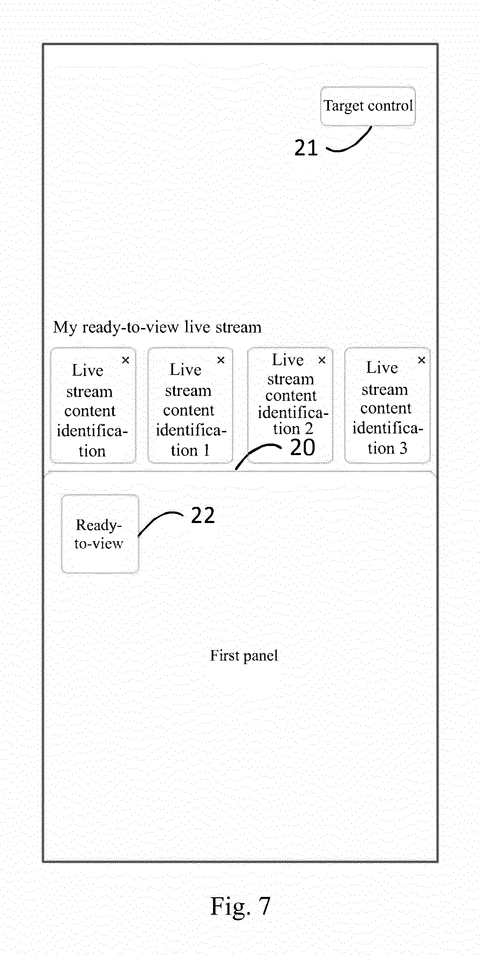

Specifically, when it is detected that the user acts on the first interactive operation in the media content presentation page for instructing the display of the first panel 20, the first panel 20 can be presented in the media content presentation page, and the addition control 22 of the target media content is displayed in the first panel 20 for the case where the target media content is the live stream content. For the case where the ready-to-view live stream list is not empty, the ready-to-view live stream list of the user is displayed in the preset associated region of the first panel 20, as shown in Fig. 2. Accordingly, when it is detected that the user acts on the ready-to-view live stream addition operation in the first panel 20, such as when it is detected that the user triggers the addition control displayed in the first panel 20, the media content identification of the target media content may be added to the ready-to-view live stream list displayed in the preset associated region, such as adding the media content identification of the target media content to the first live stream identification displaying position of the preset associated region (as shown in Fig.7), as shown in Fig.7 and so on, so as to add the media content identification displaying the target media content in the ready-to-view live stream list.

In some embodiments, the user may also perform a ready-to-view live stream addition operation by triggering an addition control displayed in the third panel. At this time, optionally, the method for playing the live stream content provided by the present embodiment further includes: in response to a second interactive operation acting in the media content presentation page, displaying a third panel, wherein the addition control for the target media content is displayed in the third panel. Herein, when the target media content is a live stream content, the third panel may be used for displaying an addition control of the target media content, and may not be used for displaying the ready-to-view live stream list of the user. The second interactive operation may be an operation for instructing the third panel to display the target media content.

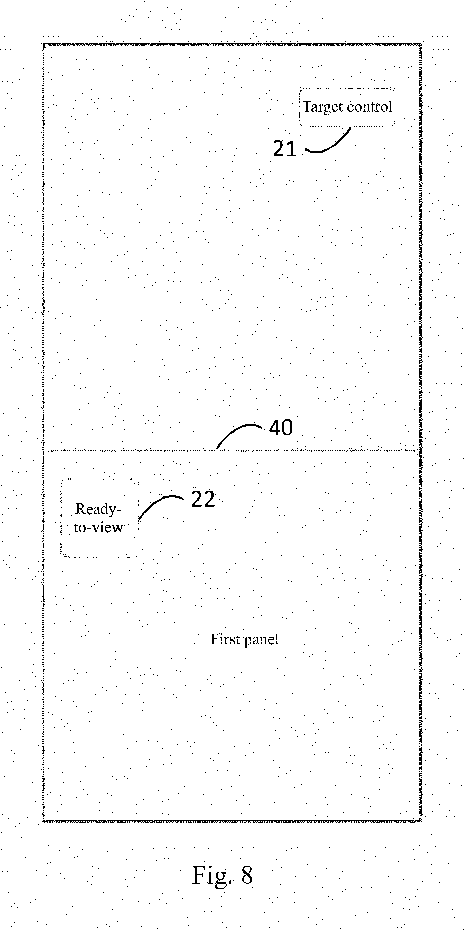

Exemplarily, the third panel 40 may be a more panel and the second interactive operation may be an operation to trigger a more control displayed in the media content presentation page. In the present embodiment, when the target media content is the live stream content, the media content presentation page may be a live stream page. At this time, the current application program may display a more control of the target media content in the media content presentation page, and display the third panel 40 as well as the addition control 22 of the target media content in the third panel 40, as shown in Fig.8 (other controls in the third panel 40 except the addition control are not shown in the figure), when it is detected that the user performs the second interactive operation, for example, when it is detected that the user triggers the more control. Thus, when it is detected that the user triggers the addition control 22, it may be determined that a ready-to-view live stream addition operation for the target media content is received, the target media content is added to the ready-to-view live stream list of the user in response to the ready-to-view live stream addition operation, and the third panel 40 may remain displayed or may be not displayed.

In some embodiments, the method for playing live stream content provided by the present embodiment further includes: in response to the ready-to-view live stream addition operation acting on the addition control displayed in the third panel, controlling the movement of a first image in the target media content to a target control, and reducing the displaying size of the first image during the movement, wherein the target control is displayed in the media content presentation page; the target control is configured for triggering the execution of the first interactive operation; when the first image moves to arrive at a preset displaying position of the target control, the displaying of the first image is stopped.

Herein, the first image can be a preset image in the target media content, such as an image displayed in a certain frame or a certain picture in the target media content. The certain frame or the certain picture can be, for example, a video frame or a picture displayed in a media content presentation page when the ready-to-view live stream addition operation is received. This is described as an embodiment below. The target control may be a control displayed in the media content presentation page and used for triggering execution of the first interactive operation, such as a more live stream control, the more live stream control may be displayed when the target media content is the live stream content. The preset displaying position may be a displaying position of the target control, such as a boundary position of the target control or a center position of the target control, etc.

In the above-mentioned embodiment, when receiving the ready-to-view live stream addition operation acting on the addition control displayed in the third panel, in addition to adding the media content identification of the target media content to the user's ready-to-view live stream list, the first image may be further controlled to move towards the target control displayed in the media content presentation page, so as to prompt the user to view the ready-to-view live stream added thereto by triggering the target control, so as to facilitate the user to clearly know the re-visit mode of the ready-to-view live stream.

Specifically, when it is detected that the user triggers the addition control displayed in the third panel, the first image displayed in the media content presentation page at the moment when it is detected that the user triggers the addition control can be acquired, the target media content is kept playing, and the first image is controlled to move towards the target control. In the process of controlling the first image to move towards the target control, the displaying size of the first image is gradually reduced. When the first image moves to arrive at the preset displaying position of the target control, the displaying of the first image is stopped.

S203, in response to a first interactive operation acting in the media content presentation page, a target panel is displayed and S204 or S205 is performed, wherein a preset associated region of the target panel is configured for displaying a ready-to-view live stream list of a user.

S204, in response to a deletion operation acting in the ready-to-view live stream list, the second live stream content identification in the ready-to-view live stream list is deleted, wherein the second live stream content identification corresponds to the deletion operation.

Herein, the deletion operation may be an operation for instructing to delete a certain live stream content identification from the ready-to-view live stream list, such as an operation for triggering a deletion control (such as the "×" control shown in Figs. 2, 3, 6 and 7) corresponding to the certain live stream content identification in the ready-to-view live stream list. The second live stream content identification may be the live stream content identification deleted as instructed by the deletion operation.

In the present embodiment, the corresponding live stream content identification within the ready-to-view live stream list may be deleted based on the user's deletion operation. Specifically, when the deletion operation acting in the ready-to-view live stream list is received, a live stream content identification corresponding to the deletion operation can be determined, namely, a second live stream content identification is determined, and the second live stream content identification is deleted from the ready-to-view live stream list.

S205, in response to a playback operation acting on a first live stream content identification in the ready-to-view live stream list, a target live stream content is played in a live stream page, wherein the playback operation acts on a first live stream content identification in the ready-to-view live stream list, and the target live stream content corresponds to the first live stream content identification.

S206, in response to a live stream content switching operation acting in the live stream page, the live stream content played in the live stream page is switched according to a live content stream of the live stream page, wherein the live content stream contains live stream content corresponding to each live stream content identification in the ready-to-view live stream list.

The live stream content switching operation may be a trigger operation for instructing to switch the live stream content played in the live stream page, such as a sliding operation in a preset direction within the live stream page. The preset direction may be set as needed. For example, the preset direction may be set as a horizontal direction or a vertical direction, etc. and the present embodiment is not limited thereto.

The live content stream may include live stream content corresponding to each live stream content identification in the live stream list, and may further include recommending live stream content. The order of arranging the live stream content corresponding to each live stream content identification in the live stream content list and the recommending live stream content in the live content stream can be set flexibly. Optionally, the live content stream further includes recommending live stream content; and the recommending live stream content is arranged behind the live stream content corresponding to each live stream content identification in the ready-to-view live stream list. For example, the live stream content corresponding to each live stream content identification in the ready-to-view live stream list of the user is preferentially arranged in the live content stream, and the recommending live stream content is arranged behind the live stream content corresponding to each live stream content identification in the ready-to-view live stream list, so as to ensure that when the user performs a live stream content switching operation in the live stream page, it is possible to preferentially switching to the live stream content in the ready-to-view live stream list.

Herein, the target live stream content corresponding to the playback operation of the user can be arranged at the first position of the live content stream, so as to facilitate the user to switch the live stream content. The order of arranging the live stream contents of the ready-to-view live stream list in the live content stream other than the target live stream contents can be set flexibly. For example, each live stream content can be arranged according to the order of arranging the live stream content identification of each live stream content in the ready-to-view live stream list or the start time of each live stream content, etc.

Exemplarily, when the live stream content switching operation acting in the live stream page is received, the live stream content played in the live stream page can be switched to the live stream content corresponding to the live stream content switching operation, according to the live content stream of the live stream page; for example, the live stream content played in the live stream page can be switched to the previous live stream content or the next live stream content in the live content stream corresponding to the live stream content switching operation.

The method for playing live stream content provided in the present embodiment enables a user to add or delete the live stream content in the ready-to-view live stream content list and to switch currently viewed live stream content according to the needs, and can provide the user with a diversified viewing mode of live stream content and simplify the user's operations for reviewing different live stream content.

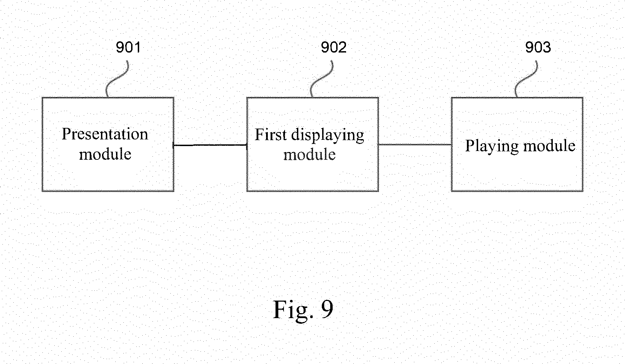

Fig. 9 is a structure block diagram of an apparatus for playing live stream content according to an embodiment of the present disclosure. The apparatus may be implemented in software and/or hardware, and may be configured in an electronic device, for example, in a mobile phone or a tablet computer. It can quickly return to a live stream room viewed by a user by performing the method for playing the live stream content. As shown in Fig. 9, the apparatus for playing live stream content provided by the present embodiment includes a presentation module 901, a first displaying module 902 and a playing module 903, wherein
a presentation module 901, configured for presenting target media content in a media content presentation page;
a first displaying module 902, configured for displaying a target panel in response to a first interactive operation acting in the media content presentation page, wherein a preset associated region of the target panel is configured for displaying a ready-to-view live stream list of a user; and
a playing module 903, configured for playing a target live stream content in a live stream page in response to a playback operation acting on a first live stream content identification in the ready-to-view live stream list, wherein the playback operation acts on a first live stream content identification in the ready-to-view live stream list, and the target live stream content corresponds to the first live stream content identification.

In the apparatus for playing live stream content provided in the present embodiment, presentation module is used to display the target media content in the media content presentation page; first displaying module is used to display a target panel in response to a first interactive operation acting in the media content presentation page, wherein a preset associated region of the target panel is configured for displaying a ready-to-view live stream list of a user; and the playing module is used to display a target live stream content in a live stream page in response to a playback operation acting in the ready-to-view live stream list, wherein the playback operation acts on a first live stream content identification in the ready-to-view live stream list, and the target live stream content corresponds to the first live stream content identification. By using the above-mentioned technical solution, the present embodiment displays a ready-to-view live stream list based on a first interactive operation of a user, and plays corresponding live stream content based on a playback operation of the user in the ready-to-view live stream list, which can quickly return to play the corresponding live stream viewed by the user, enrich the interactive mode for watching the live stream, provide convenience for the user to view the ready-to-view live stream, and improve the live stream viewing experience of the user.

In the above-mentioned solution, the target media content may include live stream content, and the apparatus for playing live stream content provided in the present embodiment may further include: a first addition module, configured for adding a media content identification of the target media content to the ready-to-view live stream list of the user in response to a ready-to-view live stream addition operation for the target media content, wherein the media content identification is a live stream content identification.

In the above-mentioned solution, the target panel may include at least one of a first panel in which an addition control for the target media content is displayed and a second panel in which an addition control for the target media content is not be displayed; and the addition control may be configured for triggering the execution of the ready-to-view live stream addition operation.

In the above-mentioned solution, the ready-to-view live stream addition operation may act on an addition control displayed in the first panel. The first displaying module 902 may be configured for, if the ready-to-view live stream list of the user is empty, displaying the target panel, wherein the ready-to-view live stream list of the user is not displayed. The first addition module may be configured for displaying the ready-to-view live stream list in the preset associated region of the target panel, and displaying a media content identification of the target media content in the ready-to-view live stream list.

In the above-mentioned solution, the ready-to-view live stream addition operation may act on an addition control displayed in the first panel. The first displaying module 902 may be configured for, if the ready-to-view live stream list of the user is not empty, displaying a target panel and displaying the ready-to-view live stream list in a preset associated region of the target panel. The first addition module can be configured for adding a media content identification for displaying the target media content to the ready-to-view live stream list.

Further, the apparatus for playing live stream content provided by the present embodiment may further include: a second displaying module, configured for displaying a third panel in response to a second interactive operation acting in the media content presentation page, wherein the addition control for the target media content is displayed in the third panel.

Further, the apparatus for playing live stream content provided by the present embodiment may further include: a movement control module, configured for, in response to the ready-to-view live stream addition operation acting on the addition control displayed in the third panel, controlling a first image in the target media content to move towards a target control, and reducing the displaying size of the first image during the movement, wherein the target control is displayed in the media content presentation page; the target control is configured for triggering the execution of the first interactive operation; and a displaying stopping module, configured for stopping displaying the first image when the first image moves to arrive at a preset displaying position of the target control.

In the above-mentioned solution, the ready-to-view live stream list is used for displaying live stream content identification of live stream content in the live stream which has not been ended, and the apparatus for playing live stream content provided in the present embodiment may further include: a removal module configured for, for each live stream content identification in the ready-to-view live stream list, when the live stream of current live stream content corresponding to the current live stream content identification has ended, removing the current live stream content identification from the ready-to-view live stream list; and a second addition module configured for, when a host of the current live stream content restarts a live stream, re-adding a current live stream content identification to the ready-to-view live stream list, or not re-adding the current live stream content identification to the ready-to-view live stream list.

Further, the apparatus for playing live stream content provided by the present embodiment may further include: a deletion module configured for, after the displaying the target panel, deleting the second live stream content identification from the ready-to-view live stream list in response to a deletion operation acting in the ready-to-view live stream list, wherein the second live stream content identification corresponds to the deletion operation.

Further, the apparatus for playing live stream content provided by the present embodiment may further include: a switching module configured for, after the playing the target live stream content in the live stream page, in response to a live stream content switching operation acting in the live stream page, switching the live stream content played in the live stream page according to a live content stream of the live stream page, wherein the live content stream contains live stream content corresponding to each live stream content identification in the ready-to-view live stream list.

In the above-mentioned solution, the live content stream further may include: recommending live stream content; and the recommending live stream content may be arranged behind the live stream content corresponding to each live stream content identification in the ready-to-view live stream list.

In the above-mentioned solution, the live stream content identification may include a live stream card for displaying at least one of a second image corresponding to the respective live stream content and interaction status information in a corresponding live stream room. The second image may include a live stream cover or a preview image.

The apparatus for playing live stream content provided by an embodiment of the present disclosure may execute the method for playing live stream content provided by any embodiment of the present disclosure, and has corresponding functional modules and advantageous effects of executing the method for playing live stream content. The technical details not described in detail in the present embodiment can be referred to a method for playing live stream content provided by any embodiment of the present disclosure.

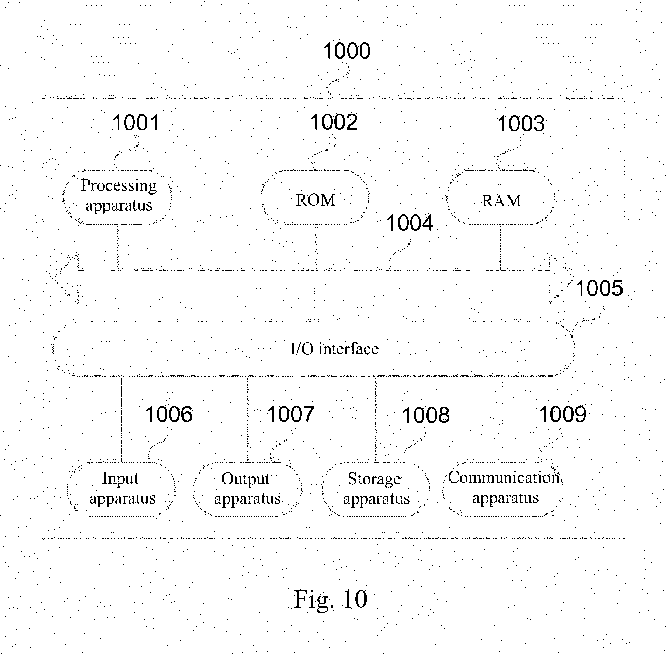

With reference to Fig. 10, it illustrates a structure diagram of an electronic device (e.g., a terminal device) 1000 suitable for implementing an embodiment of the present disclosure. Terminal devices in embodiments of the present disclosure may include, but are not limited to, mobile terminals such as mobile phones, notebook computers, digital broadcast receivers, PDA (personal digital assistants), PAD (tablet computers), PMP (portable multimedia players), vehicle terminals (e.g., vehicle navigation terminals), etc. and fixed terminals such as ones of digital TVs, desktop computers, etc. The electronic device shown in Fig. 10 is only one embodiment and should not impose any limitation on the functionality and scope of use of embodiments of the present disclosure.

As shown in Fig. 10, the electronic device 1000 may include a processing device (e.g., a central processing unit, a graphics processor, etc.) 1001 that may perform various suitable actions and processes in accordance with a program stored in a read only memory (ROM) 1002 or a program loaded from the storage device 1008 into a random access memory (RAM) 1003. Various programs and data required for the operation of the electronic device 1000 can also be stored in the RAM 1003. The processing apparatuses 1001, ROM 1002, and RAM 1003 are connected to each other via a bus 1004. An input/output (I/O) interface 1005 is further connected to the bus 1004.

In general, the following devices may be connected to an I/O interface 1005: an input device 1006 including, for example, a touch screen, a touch pad, a keyboard, a mouse, a camera, a microphone, an accelerometer, a gyroscope, etc.; an output device 1007 including, for example, a liquid crystal display (LCD), a speaker, a vibrator, etc.; a storage device 1008 including, for example, a magnetic tape, a hard disk, etc.; and a communication device 1009. The communication device 1009 may allow the electronic device 1000 to communicate wirelessly or wired with other devices to exchange data. Although Fig. 10 illustrates an electronic device 1000 having various means, it should be understood that not all illustrated means are required to be implemented or provided. More or fewer means may alternatively be implemented or provided.

In particular, processes described above with reference to flow diagrams may be implemented as computer software programs in accordance with embodiments of the present disclosure. For example, embodiments of the present disclosure include a computer program product including a computer program embodied on a non-transitory computer-readable medium, the computer program comprising program code for performing the methods illustrated in the flowcharts. In such embodiments, the computer program may be downloaded and installed from a network via the communication device 1009, or from the storage device 1008, or from the ROM 1002. The computer program, when executed by the processing apparatus 1001, performs the functions defined above in the method of embodiments of the present disclosure.

Note that the computer-readable medium described above in the present disclosure can be either a computer-readable signal medium or a computer-readable storage medium or any combination thereof. The readable storage medium may include, for example but not limited to, electronic, magnetic, optical, electromagnetic, infrared, or semiconductor systems, apparatuses, or devices, or any combination thereof. More specific examples of computer-readable storage media may include, but are not limited to an electrical connection having one or more wires, a portable computer diskette, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination thereof. In this disclosure, a computer-readable storage medium may be any tangible medium that can contain or store a program that can be used by or in connection with an instruction execution system, apparatus, or device. In this disclosure, the computer-readable signal medium may include a data signal embodied in baseband or propagated as part of a carrier wave carrying computer-readable program code. Such propagated data signals may take many forms, including but not limited to electromagnetic signals, optical signals, or any suitable combination of the preceding. The computer-readable signal medium can also be any computer-readable medium other than a computer-readable storage medium that can send, propagate, or transport the program for use by or in connection with the instruction execution system, apparatus, or device. The program code embodied on the computer readable medium may be transmitted over any suitable medium including, but not limited to, wire, fiber optic cable, RF (radio frequency), and the like, or any suitable combination of the foregoing.

In some embodiments, the clients or servers may communicate using any currently known or future developed network protocol, such as HTTP (HyperText Transfer Protocol), and may be interconnected with any form or medium of digital data communication (e.g., a communication network). Examples of communication networks include local area networks ("LAN"), wide area networks ("WAN"), internetworks (e.g., the Internet), and peer-to-peer networks (e.g., the ad hoc peer-to-peer network), as well as any network currently known or developed in the future.

The computer-readable medium may be included in the electronic device. It may also present separately and not fixed into the electronic device.

The computer-readable medium carries one or more programs that, when executed by the electronic device, cause the electronic device to: present target media content in the media content presentation page; in response to a first interactive operation acting in the media content presentation page, display a target panel, wherein a preset associated region of the target panel is configured for displaying a ready-to-view live stream list of a user; and in response to a playback operation acting in the ready-to-view live stream list, display a target live stream content in a live stream page, wherein the playback operation acts on a first live stream content identification in the ready-to-view live stream list, and the target live stream content corresponds to the first live stream content identification.

Computer program code for carrying out operations of the present disclosure may be written in one or more programming languages, including, but not limited to, object-oriented programming languages, such as Java, Smalltalk, C++, and conventional procedural programming languages, such as the "C" language or similar programming languages, or combinations thereof. The procedure code may be executed entirely on the user's computer, partially on the user's computer, as a stand-alone software package, partially on the user's computer, partially on a remote computer, or entirely on the remote computer or server. In the case of a remote computer, the remote computer may be connected to the user's computer through any kind of network, including a LAN or a WAN, or may be connected to an external computer (e.g., through an Internet connection using an Internet Service Provider).

The flowcharts and block diagrams in the drawings illustrate architecture, functionality, and operation of possible implementations of systems, methods, and computer program products in accordance with various embodiments of the present disclosure. In this regard, each block in the flow chart or block diagram may represent a module, a program segment, or part of code, which includes one or more executable instructions for implementing the specified logical functions. It should also be noted that in some alternative implementations, the functions noted in the blocks may occur differently than the order noted in the drawings. For example, two blocks represented in succession may, in fact, be executed substantially concurrently or they may sometimes be executed in the reverse order, depending upon the functionality involved. It is also noted that each block of the block diagrams and/or flowcharts, and combinations of blocks in the block diagrams and/or flowcharts, can be implemented by special purpose hardware-based systems which perform the specified functions or operations, or combinations of special purpose hardware and computer instructions.

The units described in connection with the embodiments disclosed herein may be implemented as software or hardware. The name of the module in some cases does not constitute a limitation on the unit itself.

The functions described herein above may be performed, at least in part, by one or more hardware logic components. For example, without limitation, exemplary types of hardware logic components that may be used include field programmable gate arrays (FPGA), application specific integrated circuits (ASIC), application specific standard products (ASSP), system on chips (SOC), complex programmable logic devices (CPLD), etc.

In the context of this disclosure, a machine-readable medium can be a tangible medium that may contain or store a program for use by or in connection with an instruction execution system, device, or apparatus. The machine-readable medium may be a machine-readable signal medium or a machine-readable storage medium. The machine-readable medium may include, but is not limited to, electronic, magnetic, optical, electromagnetic, infrared, or semi-conductive systems, devices, or apparatuses, or any suitable combination thereof. More specific examples of the machine-readable storage medium may include one or more wire-based electrical connections, a portable computer diskette, a hard disk, a random access memory (RAM), a read-only memory (ROM), an erasable programmable read-only memory (EPROM or Flash memory), an optical fiber, a portable compact disk read-only memory (CD-ROM), an optical storage apparatus, a magnetic storage apparatus, or any suitable combination thereof.

According to one or more embodiment, Example 1 provides a method for playing live stream content, comprising:
presenting target media content in a media content presentation page;
displaying a target panel, in response to a first interactive operation acting in the media content presentation page, wherein a preset associated region of the target panel is configured for displaying a ready-to-view live stream list of a user; and
playing a target live stream content in a live stream page, in response to a playback operation acting on a first live stream content identification in the ready-to-view live stream list, wherein the playback operation acts on a first live stream content identification in the ready-to-view live stream list, and the target live stream content corresponds to the first live stream content identification.

According to one or more embodiment, in Example 2 according to Example 1, the target media content comprises live stream content, the method further comprises:
adding a media content identification of the target media content to the ready-to-view live stream list of the user, in response to a ready-to-view live stream addition operation for the target media content, wherein the media content identification is a live stream content identification.

According to one or more embodiment, in Example 3 according to Example 2, the target panel comprises at least one of a first panel in which an addition control for the target media content is displayed and a second panel in which an addition control for the target media content is not displayed; and the addition control is configured for triggering the execution of the ready-to-view live stream addition operation.

According to one or more embodiment, in Example 4 according to Example 3, the ready-to-view live stream addition operation acts on the addition control displayed in the first panel, the displaying the target panel comprises:
if the ready-to-view live stream list of the user is empty, displaying the target panel, wherein the ready-to-view live stream list of the user is not displayed;
the adding the media content identification of the target media content to the ready-to-view live stream list of the user comprises:
displaying the ready-to-view live stream list in the preset associated region of the target panel, and displaying the media content identification of the target media content in the ready-to-view live stream list.

According to one or more embodiment, in Example 5 according to Example 3, the ready-to-view live stream addition operation acts on the addition control displayed in the first panel, the displaying the target panel comprises:
if the ready-to-view live stream list of the user is not empty, displaying the target panel, and displaying the ready-to-view live stream list in the preset associated region of the target panel;
the adding the media content identification of the target media content to the ready-to-view live stream list of the user comprises:
adding the media content identification for displaying the target media content to the ready-to-view live stream list.

According to one or more embodiment, in Example 6 according to Example 3, the method further comprises:
displaying a third panel, in response to a second interactive operation acting in the media content presentation page, wherein the addition control for the target media content is displayed in the third panel.

According to one or more embodiment, in Example 7 according to Example 6, the method further comprises:
in response to the ready-to-view live stream addition operation acting on the addition control displayed in the third panel, controlling a first image in the target media content to move towards a target control, and reducing a displaying size of the first image during the movement, wherein the target control is displayed in the media content presentation page; the target control is configured for triggering the execution of the first interactive operation; and
stopping displaying the first image when the first image moves to arrive at a preset displaying position of the target control.

According to one or more embodiment, in Example 8 according to Example 1, the ready-to-view live stream list is configured for displaying the live stream content identification of the live stream content that has not ended, the method further comprises:
for each live stream content identification in the ready-to-view live stream list, when the live stream of current live stream content corresponding to a current live stream content identification has ended , removing the current live stream content identification from the ready-to-view live stream list; and
when a host of the current live stream content restarts a live stream, re-adding the current live stream content identification to the ready-to-view live stream list, or not re-adding the current live stream content identification to the ready-to-view live stream list.

According to one or more embodiment, in Example 9 according to any one of Examples 1 to 8, after the displaying the target panel, the method further comprises:
deleting the second live stream content identification in the ready-to-view live stream list, in response to a deletion operation acting in the ready-to-view live stream list, wherein the second live stream content identification corresponds to the deletion operation.

According to one or more embodiment, in Example 10 according to any one of Examples 1 to 8, after the playing the target live stream content in the live stream page, the method further comprises:
in response to a live stream content switching operation acting in the live stream page, switching the live stream content played in the live stream page according to a live content stream of the live stream page, wherein the live content stream contains live stream content corresponding to each live stream content identification in the ready-to-view live stream list.

According to one or more embodiment, in Example 11 according to Example 10, the live content stream further comprises recommending live stream content; and the recommending live stream content is arranged behind the live stream content corresponding to each live stream content identification in the ready-to-view live stream list.

According to one or more embodiment, in Example 12 according to any one of Examples 1 to 8, the live stream content identification comprises a live stream card for displaying at least one of a second image corresponding to the respective live stream content and interaction status information in a respective live stream room, the second image comprising a live stream cover or a preview image.

According to one or more embodiment, Example 13 provides an apparatus for playing live stream content, comprising:
a presentation module, configured for presenting target media content in a media content presentation page;
a first displaying module, configured for displaying a target panel in response to a first interactive operation acting in the media content presentation page, wherein a preset associated region of the target panel is configured for displaying a ready-to-view live stream list of a user; and
a playing module, configured for playing a target live stream content in a live stream page in response to a playback operation acting on a first live stream content identification in the ready-to-view live stream list, wherein the playback operation acts on a first live stream content identification in the ready-to-view live stream list, and the target live stream content corresponds to the first live stream content identification.

According to one or more embodiment, Example 14 provides an electronic device, comprising:
at least one processor; and
a memory, communicatively connected with the at least one processor;
wherein the memory stores a computer program executable by the at least one processor; and the computer program is executed by the at least one processor to enable the at least one processor to perform the method for playing the live stream content according to any one of Examples 1 to 12.

According to one or more embodiment, Example 15 provides a computer-readable storage medium, wherein the computer-readable storage medium stores computer instructions for causing a processor, when executed, to perform the method for playing the live stream content according to any one of Examples 1 to 12.

According to one or more embodiment, Example 16 provides a computer program product, wherein the computer program product comprises a computer program which, when executed by a processor, performs the method for playing the live stream content according to any one of Examples 1 to 12.

The foregoing are merely descriptions of the preferred embodiments of the present disclosure and the explanations of the technical principles involved. It will be appreciated by those skilled in the art that the scope of the disclosure involved herein is not limited to the technical solutions formed by a specific combination of the technical features described above, and shall cover other technical solutions formed by any combination of the technical features described above or equivalent features thereof without departing from the concept of the present disclosure. For example, the technical features described above may be mutually replaced with the technical features having similar functions disclosed herein (but not limited thereto) to form new technical solutions.

In addition, while operations have been described in a particular order, it shall not be construed as requiring that such operations are performed in the stated specific order or sequence. Under certain circumstances, multitasking and parallel processing may be advantageous. Similarly, while some specific implementation details are included in the above discussions, these shall not be construed as limitations to the present disclosure. Some features described in the context of a separate embodiment may also be combined in a single embodiment. Rather, various features described in the context of a single embodiment may also be implemented separately or in any appropriate sub-combination in a plurality of embodiments.

Although the present subject matter has been described in a language specific to structural features and/or logical method acts, it will be appreciated that the subject matter defined in the appended claims is not necessarily limited to the particular features and acts described above. Rather, the particular features and acts described above are merely exemplary forms for implementing the claims. Specific manners of operations performed by the modules in the apparatus in the above embodiment have been described in detail in the embodiments regarding the method, which will not be explained and described in detail herein again.

## Claims

1. A method for playing live stream content, comprising:
presenting target media content in a media content presentation page;
displaying a target panel, in response to a first interactive operation acting in the media content presentation page, wherein a preset associated region of the target panel is configured for displaying a ready-to-view live stream list of a user; and
playing a target live stream content in a live stream page, in response to a playback operation acting on a first live stream content identification in the ready-to-view live stream list, wherein the playback operation acts on a first live stream content identification in the ready-to-view live stream list, and the target live stream content corresponds to the first live stream content identification.

2. The method according to claim **1,** wherein the target media content comprises live stream content, the method further comprises:
adding a media content identification of the target media content to the ready-to-view live stream list of the user, in response to a ready-to-view live stream addition operation for the target media content, wherein the media content identification is a live stream content identification.

3. The method according to claim 2, wherein the target panel comprises at least one of a first panel in which an addition control for the target media content is displayed and a second panel in which an addition control for the target media content is not displayed; and the addition control is configured for triggering the execution of the ready-to-view live stream addition operation.

4. The method according to claim 3, wherein the ready-to-view live stream addition operation acts on the addition control displayed in the first panel,
the displaying the target panel comprises:
if the ready-to-view live stream list of the user is empty, displaying the target panel, wherein the ready-to-view live stream list of the user is not displayed;
the adding the media content identification of the target media content to the ready-to-view live stream list of the user comprises:
displaying the ready-to-view live stream list in the preset associated region of the target panel, and displaying the media content identification of the target media content in the ready-to-view live stream list.

5. The method according to claim 3, wherein the ready-to-view live stream addition operation acts on the addition control displayed in the first panel,
the displaying the target panel comprises:
if the ready-to-view live stream list of the user is not empty, displaying the target panel, and displaying the ready-to-view live stream list in the preset associated region of the target panel;
the adding the media content identification of the target media content to the ready-to-view live stream list of the user comprises:
adding the media content identification for displaying the target media content to the ready-to-view live stream list.

6. The method according to any one of claims 3-5, further comprising:
displaying a third panel, in response to a second interactive operation acting in the media content presentation page, wherein the addition control for the target media content is displayed in the third panel.

7. The method according to claim 6, further comprising:
in response to the ready-to-view live stream addition operation acting on the addition control displayed in the third panel, controlling a first image in the target media content to move towards a target control, and reducing a displaying size of the first image during the movement, wherein the target control is displayed in the media content presentation page; the target control is configured for triggering the execution of the first interactive operation; and
stopping displaying the first image when the first image move to arrive at a preset displaying position of the target control.

8. The method according to any one of claims 1-7, wherein the ready-to-view live stream list is configured for displaying the live stream content identification of the live stream content that has not ended, the method further comprises:
for each live stream content identification in the ready-to-view live stream list, when the live stream of current live stream content corresponding to a current live stream content identification has ended , removing the current live stream content identification from the ready-to-view live stream list; and
when a host of the current live stream content restarts a live stream, re-adding the current live stream content identification to the ready-to-view live stream list, or not re-adding the current live stream content identification to the ready-to-view live stream list.

9. The method according to any one of claims 1-8, wherein after the displaying the target panel, the method further comprises:
deleting the second live stream content identification in the ready-to-view live stream list, in response to a deletion operation acting in the ready-to-view live stream list, wherein the second live stream content identification corresponds to the deletion operation.

10. The method according to any one of claims 1-9, wherein after the playing the target live stream content in the live stream page, the method further comprises:
in response to a live stream content switching operation acting in the live stream page, switching the live stream content played in the live stream page according to a live content stream of the live stream page, wherein the live content stream contains live stream content corresponding to each live stream content identification in the ready-to-view live stream list.

11. The method according to claim 10, wherein the live content stream further comprises recommending live stream content; and the recommending live stream content is arranged behind the live stream content corresponding to each live stream content identification in the ready-to-view live stream list.

12. The method according to any one of claims 1-11, wherein the live stream content identification comprises a live stream card for displaying at least one of a second image corresponding to the respective live stream content and interaction status information in a respective live stream room, the second image comprising a live stream cover or a preview image.

13. An apparatus for playing live stream content, comprising:
a presentation module, configured for presenting target media content in a media content presentation page;
a first displaying module, configured for displaying a target panel in response to a first interactive operation acting in the media content presentation page, wherein a preset associated region of the target panel is configured for displaying a ready-to-view live stream list of a user; and
a playing module, configured for playing a target live stream content in a live stream page in response to a playback operation acting on a first live stream content identification in the ready-to-view live stream list, wherein the playback operation acts on a first live stream content identification in the ready-to-view live stream list, and the target live stream content corresponds to the first live stream content identification.

14. An electronic device, comprising:
at least one processor; and
a memory, communicatively connected with the at least one processor;
wherein the memory stores a computer program executable by the at least one processor; and the computer program is executed by the at least one processor to enable the at least one processor to perform the method for playing the live stream content according to any one of claims 1-12.

15. A computer-readable storage medium, wherein the computer-readable storage medium stores computer instructions for causing a processor, when executed, to perform the method for playing the live stream content according to any one of claims 1-12.

16. A computer program product, wherein the computer program product comprises a computer program which, when executed by a processor, performs the method for playing the live stream content according to any one of claims 1-12.
